# EUROPEAN PATENT APPLICATION

(11) **EP 4 383 304 A1**
(43) Date of publication of application: **12.06.2024**
(21) Application number: 22212302.8
(22) Date of filing: 08.12.2022
(51) Int. Cl.: H01H 31/00, H01H 31/28

(54) **TORSION SPRING ASSEMBLY FOR SWITCHING APPARATUS**

(71) Applicant: Hitachi Energy Ltd, 8050 Zürich (CH)
(72) Inventor: CHAUHAN, Shashwat, 380013 Ahmedabad (IN); JOSHI, Yogendra, 391410 Vadodara (IN)
(74) Representative: Zacco Sweden AB

(57) **Abstract**

The invention relates to a torsion spring assembly for a switching apparatus (90, 80). The torsion spring assembly comprises at least one torsion spring (12a, 12b, 12c) configured to be arranged around a pivot shaft (18, 20) for pivoting at least one movable arm (60, 50) between a closed position in which a current path is closed, and an open position in which the current path is open. The at least one torsion spring (12a, 12b, 12c) is configured to be connected to the pivot shaft (18, 20) at a first end, and to a base structure (22, 24) supporting the pivot shaft (18, 20) at a second end.

## Description

### TECHNICAL FIELD

The present disclosure generally relates to switching apparatuses used for isolating electrical devices from a power line. More particularly, it relates to providing a torsion spring assembly for a switching apparatus.

### BACKGROUND

In general, a switching apparatus is used for isolating electrical devices from a power line. A switching apparatus could include a disconnector (for example, a vertical break disconnector) and/or an earthing switch. A disconnector is a mechanical switch adapted for isolating the electrical devices from the power line. A disconnector is typically used in high voltage environment to form a visible disconnecting point to ensure a reliable isolation of the electrical devices from the power line, such that the electrical devices can be operated or maintained safely without a load. An earthing switch/ground switch is operated together with the disconnector to connect the isolated electrical devices to a ground such that a capacitive current or an inductive current remained on the isolated electrical devices can be eliminated and the isolated electrical devices can be operated or maintained more safely.

A disconnector typically comprises a compression spring assembly, which provides a torque required for operating the disconnector. Similarly, the earthing switch connected to the disconnector comprises a dead weight assembly, which provides a torque required for operating the earthing switch. However, such compression spring assembly and dead weight assembly according to prior art comprise multiple components, which can only be assembled with high-skill. Such an assembly leads to a higher cost of the compression spring assembly and the dead weight assembly, which ultimately leads to a higher cost of the disconnector and the earthing switch.

In addition, the compression spring assembly is typically provided for disconnectors, which operate at higher voltage rating, for example, varying between 145 Kilovolt, KV, and 550 KV. Thus, the compression spring assembly may not be suitable for operating the disconnector at lower voltage rating, since torque requirement for operating the disconnector at lower voltage rating is less.

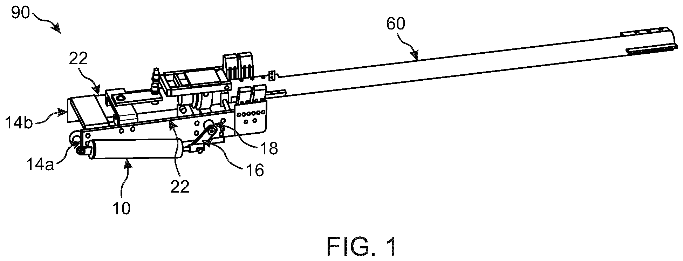

Fig. 1 discloses an example vertical break disconnector 90 comprising a compression spring assembly 10 according to prior art.

The vertical break disconnector 90 comprises a movable arm 60 (also be referred to as disconnector movable arm 60) connected to a pivot shaft 18 for pivoting the movable arm 60 between a closed position in which a current path is closed, and an open position in which a current path is open. The vertical break disconnector 90 comprises a base structure 22 supporting the pivot shaft 18. The ends of the pivot shaft 18 are supported by two sides 14a, 14b of the base structure 22, as depicted in Fig. 1. The pivot shaft 18 turns or rotates about an axis to pivot the movable arm 60 for opening or closing an earthing switch. The axis may be an axis of a driving component (for example, driving insulator) (not shown) to which the pivot shaft 18 is connected.

The vertical break disconnector 90 comprises a compression spring assembly 10. The compression spring assembly 10 is configured for providing a torque required to operate the vertical break disconnector 90. The compression spring assembly 10 is provided on a side opposite to a connecting point 16 of the pivot shaft 18 via a suitable connecting mechanism, such as a lever, link or similar.

The vertical break disconnector 90 may also comprise an earthing switch (not shown) with a movable arm and in addition, a dead weight assembly is used to support weight of the movable arm/aluminium conductor of the earthing switch by reducing energy consumption from an operating drive. The dead weight assembly provides a torque required for operating the earthing switch. The dead weight assembly is fixed on the pivot shaft in opposite direction of the aluminium conductor/movable arm of the earthing switch, for example, at 180-degree angle. However, the dead weight assembly is very heavy and bulky, since the dead weight assembly may have approximate weight of 28-30 kilogram, Kg. Thus, it is difficult to assemble the dead weight assembly at a suitable position with less time. In addition, a separate packing is required for transportation of the dead weight assembly.

### SUMMARY

The compression spring assembly and the dead weight assembly according to prior art may not be suitable for the disconnector and the earthing switch, respectively, since the compression spring assembly and the dead weight assembly are bulky and require high skill and careful assembly. In addition, the compression spring assembly may not be suitable for disconnectors operating at lower voltage ratings.

Consequently, there is a need for providing a simple and easily assembled spring assembly for a switching apparatus, which operates at lower or higher voltage ratings, that alleviates at least some of the above-cited problems.

It is therefore an object of the present disclosure to provide a torsion spring assembly for a switching apparatus, to mitigate, alleviate, or eliminate all or at least some of the abovediscussed drawbacks of presently known solutions.

This and other objects are achieved by means of a torsion spring assembly, as defined in the appended claims. The term exemplary is in the present context to be understood as serving as an instance, example or illustration.

According to a first aspect of the present disclosure, a torsion spring assembly for a switching apparatus is provided. The torsion spring assembly comprises at least one torsion spring configured to be arranged around a pivot shaft for pivoting at least one movable arm between a closed position in which a current path is closed and an open position in which the current path is open. The at least one torsion spring is configured to be connected to the pivot shaft at a first end and to a base structure supporting the pivot shaft at a second end.

Thus, providing a simple torsion spring assembly comprising less components in contrast to a compression spring assembly and a dead weight assembly of prior art. Further, the at least one torsion spring of the torsion spring assembly supports and balances any dead weight of the movable arm/current path conductor and reduces energy requirement from an operating drive for operating the switching apparatus, since the at least one torsion spring is arranged around the pivot shaft on which the movable arm/current path conductor swivels.

The second end of the at least one torsion spring may be configured to be held in a fixed position on the base structure. This enables the second end of the torsion spring to be firmly connected and thereby restricting the movement of the second end of the torsion spring, which facilitates working of the torsion spring.

The torsion spring assembly may further comprise a stopper plate configured to be attached on the base structure for maintaining the second end of the at least one torsion spring in the fixed position. The stopper plate may be a separate plate attached to the base structure for connecting the second end of the torsion spring. Thus, the stopper plate is used for preventing sliding of the second end of the torsion spring and thereby restricting the movement of the second end of the torsion spring. The stopper plate may be a bracket stopper plate.

In some examples of the present disclosure, the second end of the at least one torsion spring comprises a loop portion and is configured to be connected to the base structure by means of a fastener, such as, a screw of bolt, extending through the loop portion. The loop portion is a side loop extension of the torsion spring and the loop portion is connected to the base structure. Thus, connecting the loop portion to the base structure by means of the fastener enables fixing of the second end of the torsion spring firmly to the base structure, which prevents sliding of the second end of the torsion spring.

In some examples, the first end of the at least one torsion spring comprises a loop portion and is configured to be connected to the pivot shaft by means of a fastener, such as a screw of bolt, extending through the loop portion.

Thus, the at least one torsion spring may be easily assembled without requiring any high skill. As high skill is not required for assembling the at least one torsion spring, time required for assembling the torsion spring assembly may be reduced and the torsion spring may be easily transported as well.

In some examples, the torsion spring assembly comprises two torsion springs configured to be arranged one at each end of the pivot shaft.

The design and configuration of the torsion spring may vary, depending on the application. As an example, an inner coil diameter, an active number of body turns and a diameter of a wire of the torsion spring may depend on the switching apparatus in which the torsion spring assembly is supposed to be used. In some examples, the torsion spring may be designed for different operating voltage ranges of a disconnector. In some examples, the torsion spring may be designed for an earthing switch operating between different voltage ranges. Thus, the different designs of the torsion spring may be used for different operating voltage ranges of the switching apparatus.

According to a second aspect of the present disclosure, a switching apparatus for an electrical circuit is provided. The switching apparatus comprises at least one movable arm connected to a pivot shaft for pivoting the at least one movable arm between a closed position in which a current path is closed and an open position in which the current path is open. The switching apparatus further comprises a base structure supporting the pivot shaft. The switching apparatus further comprises a torsion spring assembly comprising at least one torsion spring arranged around the pivot shaft and connected to the pivot shaft at a first end and to the base structure at a second end. An advantage is that the torsion spring assembly provided herein may be simple and easily assembled. Thus, a cost of the torsion spring assembly may be reduced, which ultimately reduces a cost of the switching apparatus. The switching apparatus may be an earthing switch or a disconnector.

In some embodiments, any of the above aspects may additionally have features identical with or corresponding to any of the various features as explained above for any of the other aspects.

Any advantages related to the torsion spring assembly as disclosed herein may be used for any switching apparatus operating at lower voltage ratings or higher voltage ratings by varying at least some of parameters associated with the at least one torsion spring. Examples of the parameters may include a diameter of a wire of the torsion spring, wire sections, a number of coils of the torsion spring, and a diameter of the torsion spring.

Other advantages may be readily apparent to one having skill in the art. Certain examples of the present disclosure may have some, or all of the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
- Fig. 1: discloses an example vertical break disconnector comprising a compression spring assembly according to prior art;
- Fig. 2: discloses an electrical circuit, according to some examples of the present disclosure;
- Fig. 3: discloses a switching apparatus of an electrical circuit, wherein the switching apparatus comprises a torsion spring assembly and the switching apparatus is a vertical break disconnector, according to an example of the present disclosure;
- Fig. 4A: discloses a vertical break disconnector comprising a torsion spring assembly, according to some examples of the present disclosure;
- Fig. 4B: discloses a vertical break disconnector comprising a torsion spring assembly, according to some examples of the present disclosure;
- FIG. 4C: discloses another view of a vertical break disconnector comprising a torsion spring assembly, according to an example of the present disclosure;
- Figs. 5A and 5B: disclose an illustration of arranging two torsion springs, one at each end of a pivot shaft of a vertical break disconnector, according to an example of the present disclosure;
- Figs. 6A and 6B: disclose an illustration of arranging a torsion spring at an end of a pivot shat of a vertical break disconnector, according to some examples of the present disclosure;
- Figs. 7A and 7B: disclose illustration of arranging a torsion spring at an end of a pivot shaft of a vertical break disconnector, according to some examples of the present disclosure;
- Fig. 8: discloses a switching apparatus of an electrical circuit, wherein the switching apparatus comprises a torsion spring assembly and the switching apparatus is an earthing switch, according to an example of the present disclosure;
- Fig. 9: discloses an earthing switch comprising a torsion spring, according to an example of the present disclosure; and
- Fig. 10: discloses an exemplary torsion spring provided for a switching apparatus, wherein the switching apparatus is a vertical break disconnector operating at a first voltage rating, according to an example of the present disclosure.

### DETAILED DESCRIPTION

Aspects of the present disclosure will be described more fully hereinafter with reference to the accompanying drawings. The apparatus and methods disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Switching apparatus: As used herein, a switching apparatus is referred either to a disconnector, for example, a vertical break disconnector, or an earthing switch.

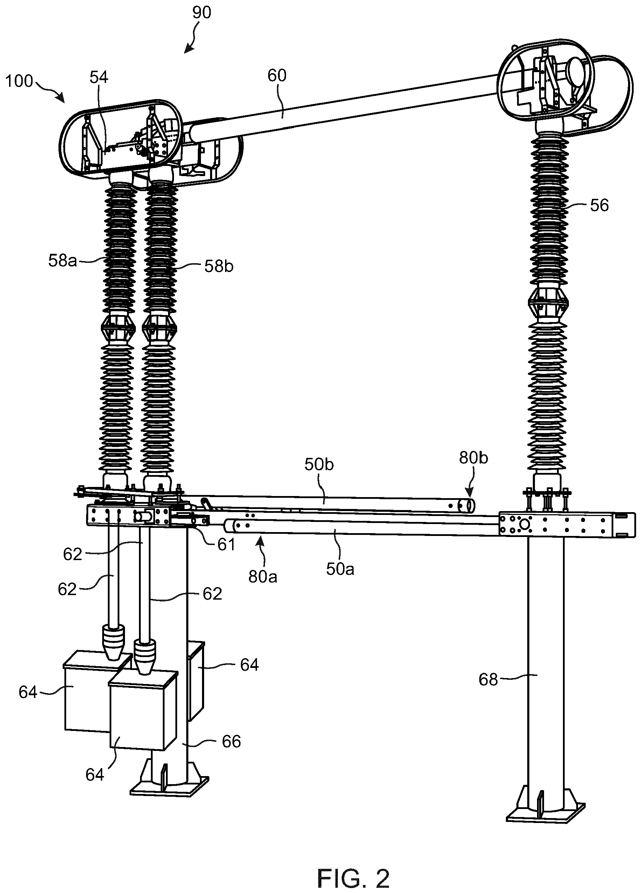

Fig. 2 discloses an example electrical circuit 100. The electrical circuit 100 referred herein comprises a switching apparatus 90, 80. In some examples, the switching apparatus 90, 80 may be a disconnector, for example, a vertical break disconnector 90. It should be noted that any other types of disconnectors, such as a horizontal knee break disconnector, a side break disconnector, or the like, may be considered herein. In some examples, the switching apparatus 90, 80 may be an earthing switch 80. In some examples, the earthing switch 80 may be operated by connecting to the vertical break disconnector 90. Herein, it should be understood that the vertical break disconnector 90 and the earthing switch 80 may be arranged together to form the electrical circuit 100.

The vertical break disconnector 90 (also referred to as isolator, switchgear, disconnecting switch, or the like) may be a mechanical switch for isolating electrical devices from a power line. The vertical break disconnector 90 may comprise a movable contact and a stationary contact (described in conjunction with figures in the later parts of the description). As depicted in Fig. 2, the movable contact may be pivotally supported on a first mounting column 66 and insulated from the first mounting column 66 with an insulating member 58a and an insulating member 58b. In some examples, the insulating members 58a and 58b may be ceramic insulating members. The stationary contact may be mounted on a second mounting column 68 and insulated from the second mounting column 68 with the insulating member 56. The movable contact and the stationary contact of the vertical break disconnector 90 are electrically connected to two ends of a power line, for example, a bus bar in a high voltage system. The movable and the stationary contact of the vertical break disconnector 90 may be respectively used for isolating one end of the power line from the other end in a visible manner after a circuit breaker in the corresponding power line has been opened.

The vertical break disconnector 90 comprises a movable arm 60 connected to a pivot shaft (described in conjunction with figures in the later parts of the description) for pivoting the movable arm 60 between a closed position in which a current path is closed, and an open position in which the current path is open.

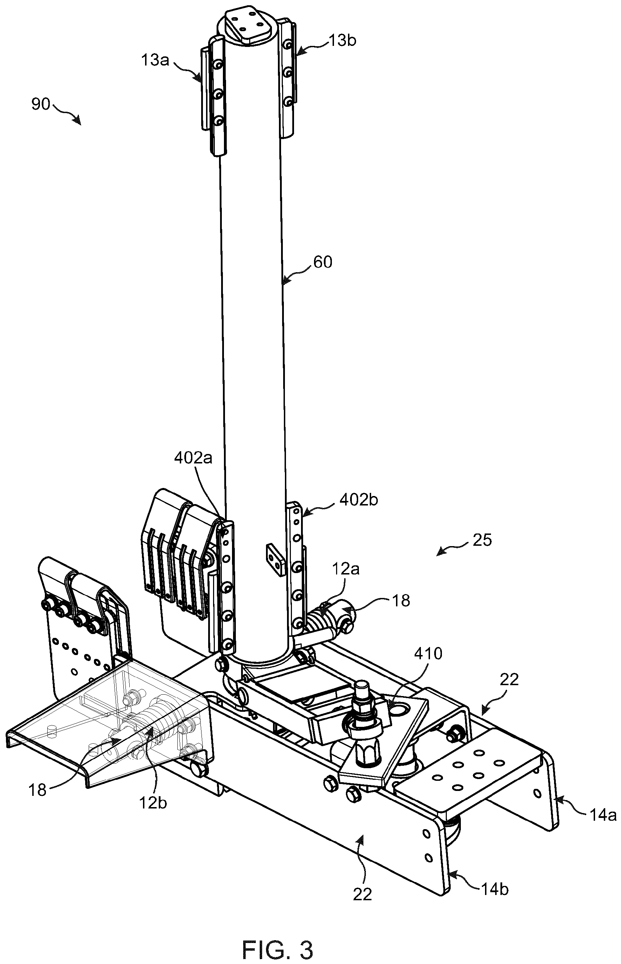

In some embodiments, the vertical break disconnector 90 may be operated along with one or more earthing switches. For simplicity, the vertical break disconnector 90 being operated with two earthing switches 80a and 80b is disclosed in Fig. 2. The earthing switches 80a and 80b may be operable to connect the isolated electrical devices to a ground, such that a capacitive current or an inductive current remained on the isolated electrical devices can be eliminated. Thereby, the isolated electrical devices may be operated or maintained more safely. The first and second earthing switches 80a and 80b comprise a movable contact and a stationary contact. The movable contact of the first earthing switch 80a is pivotably supported to the first mounting column 66. The stationary contacts of the first earthing switch 80a and the second earthing switch 80b are arranged right above a pivot axis of the respective movable contacts of the first and second earthing switches 80a and 80b (not shown in Fig. 3). The first earthing switch 80a is electrically connected between one end of the power line to which the movable contact of the vertical break disconnector 90 is connected and the ground. The second earthing switch 80b is electrically connected between the other end of the power line to which the stationary contact of the vertical break disconnector 90 is connected and the ground.

Each of the earthing switches 80a/80b comprises a movable arm 50a/50b (collectively referred to as movable arm 50) connected to a pivot shaft for pivoting the movable arm 50a/50b between a closed position in which the earthing switch is closed, and an open position in which the earthing switch is open.

As depicted in Fig. 2, when the movable arm 60 of the vertical break disconnector 90 is in a horizontal position, the movable arm 60 of the vertical break disconnector 90 is in a closed state to close the power line. In such a case, the movable arms 50a and 50b of the first earthing switch 80a and the second earthing switch 80b have to be placed in a nearly horizontal position to keep away from the respective stationary contacts of the first earthing switch 80a and the second earthing switch 80b. To the contrary, when the movable arms 50a, b of the first earthing switch 80a and the second earthing switch 80b in a vertical position, the first earthing switch 80a and the second earthing switch 80b are in a closed state to connect two ends of the power line to the ground. In such a case, the vertical break disconnector 90 is prohibited to be closed to prevent closing of the power line while the earthing switches 80a and 80b are still closed.

Further, a rotating shaft 62 from a transmission box 64 may drive the rotatable insulating member to rotate for actuating the movable contact/movable arm of the vertical break disconnector 90 pivoting about a pivot axis. Thus, the vertical break disconnector 90 may be actuated to be in the closed position and the open position.

According to prior art, vertical break disconnectors comprise compression spring assemblies, which provides a torque required for operating the vertical break disconnectors. Similarly, an earthing switch comprises a dead weight assembly, which provides a torque required for operating the earthing switch. However, the compression spring assembly and the dead weight assembly are bulky, since the compression spring assembly and the dead weight assembly comprise multiple components. Also, the compression spring assembly and the dead weight assembly may be arranged around the pivot shaft of the vertical break disconnector and the earthing switch, respectively, using high skill. Thus, time involved in arranging the compression spring assembly and the dead weight assembly may be longer. In addition, the compression spring assembly and the dead weight assembly may be suitable only for the vertical break disconnector and the earthing switch operating at higher voltage rating.

According to the present disclosure, a simple and easily assembled torsion spring assembly is provided for the switching apparatus 90 and 80. In addition, the torsion spring assembly provided herein may be suitable for the switching apparatus operating at lower or higher voltage ratings. The switching apparatus 90 and 80 herein may refer to the vertical break disconnector 90 and/or the earthing switch 80.

The torsion spring assembly comprises at least one torsion spring configured to be arranged around the pivot shaft for pivoting the at least one movable arm 60 and 50 between a closed position in which a current path is closed and an open position in which the current path is open. The at least one torsion spring is configured to be connected to the pivot shaft at a first end and to a base structure supporting the pivot shaft at a second end.

Various examples describing switching apparatus 90 and 80 and the torsion spring assembly provided for the switching apparatus 90 and 80 are explained in conjunction with figures in the later parts of the description. The switching apparatus 90 and 80 and thus the electrical circuit 100 may include several components other than the components shown in FIG. 2. The description of the other components are omitted herein for the sake of brevity.

Fig. 3 discloses a switching apparatus comprising a torsion spring assembly 25, wherein the switching apparatus is a vertical break disconnector 90. The vertical break disconnector 90 may form part of an electrical circuit 100 as depicted in Fig. 2. The vertical break disconnector 90 may be composed of a single pole or three poles, each operated simultaneously either by a single operating mechanism and mechanical linkages between the poles or by one mechanism for each pole. Each pole of the vertical break disconnector 90 comprises a movable arm 60 and a base structure 22.

The movable arm 60 may comprise movable contacts 13a, 13b, 402a and 402b. In some examples, the movable contacts 13a 13b, 402a and 402b may be made of an aluminium alloy tube with copper fingers (also be referred to as copper contacts) at its end. A number and dimension of the copper fingers may vary depending on a rated current. In some examples, the copper fingers may be silver plated with silver thickness depending on the rated current. In addition, the copper fingers may be self-cleaning and suitably designed for withstanding considerable short circuit stress. In some examples, the stationary contact may comprise an aluminium alloy welded support, which includes two high voltage terminals and of the main circuit and at least one copper flat bar, suitably shaped for correct engagement with the movable contact 13a, 13b, 402a and 402b.

The base structure 22 supports the pivot shaft 18. Two ends of the pivot shaft 18 may be supported by the base structure 22 at two sides 14a and 14b. The pivot shaft 18 may turn or rotate about an axis to pivot the movable arm 60 between a closed position in which a current path is closed and an open position in which the current path is open. The axis may be an axis of a driving component to which the pivot shaft 18 is connected. In some examples, the driving component may be a driving insulator.

The base structure 22 may also support at least one post insulator and rotating insulator rod/driving insulator (shown as insulators 58a and 58b in Fig. 2), which allow to transfer a motion of an operating mechanism to the main circuit. A rotation of the insulting rod may be transmitted to the movable arm 60 by a crank-lever mechanism 410, which makes the movable arm 60 to rotate in a vertical plane.

The vertical break disconnector 90 comprises a torsion spring assembly 25. The torsion spring assembly 25 may provide a torque required for operating the vertical break disconnector 90.

The torsion spring assembly 25 comprises at least one torsion spring 12a and 12b configured to be arranged around the pivot shaft 18 for pivoting at least one movable arm 60 between a closed position in which a current path is closed and an open position in which the current path is open. For simplicity, the torsion spring assembly comprising two torsion springs 12a and 12b configured to be arranged one at each end of the pivot shaft 18 is depicted in Fig. 3. Such an arrangement of the torsion springs 12a/12b eliminate multiple number of components from the torsion spring assembly. Thus, the torsion spring assembly 25 is simple. In addition, the torsion springs 12a/12b of the torsion spring assembly 25 may be easily assembled around the pivot shaft 18 without requiring any high skill.

As depicted in Fig. 3, the torsion spring 12a/12b is configured to be connected to the pivot shaft 18 at a first end and to the base structure 22 supporting the pivot shaft 18 at a second end.

The torsion spring 12a/12b is configured to be arranged around the same pivot shaft 18 on which the movable arm 60/current path conductor swivels. Thus, the torsion spring 12a/12b may directly support and balance a dead weight of the current path conductor and reduce energy requirement from an operating drive to operate the vertical break disconnector 90.

Various embodiments describing arrangement of the at least one torsion spring 12a/12b around the pivot shaft 18 of the vertical break disconnector 90 are explained in conjunction with figures in the later parts of the description.

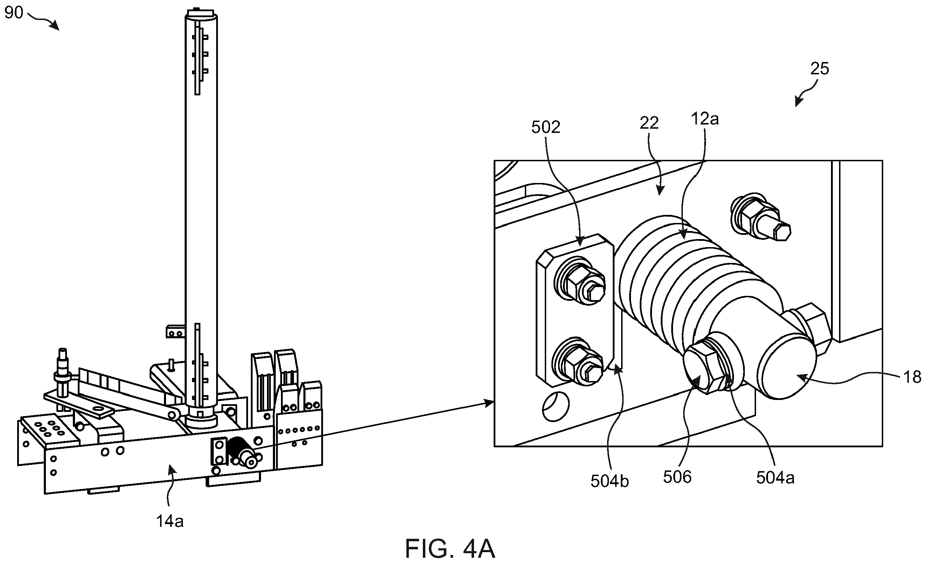

Fig. 4A discloses a vertical break disconnector 90 according to an example of the present disclosure. The vertical break disconnector 90 may be configured as the vertical break disconnector shown in Fig. 3. The vertical break disconnector 90 comprises a torsion spring 12a arranged at one end of the pivot shaft 18.

As depicted in Fig. 4A, the vertical break disconnector 90 comprises a base structure 22 supporting the pivot shaft 18, and a torsion spring assembly 25. The pivot shaft 18 supported by the base structure 22 at the side 14a is depicted in the vertical break disconnector 90, in Fig. 4A.

The torsion spring 12a is configured to be connected to the pivot shaft 18 at a first end and to a fixed surface of the base structure 22 supporting the pivot shaft 18 at a second end. In an example, as depicted in Fig. 4A, the fixed surface of the base structure 22 may be a stopper plate 502. The stopper plate 502 may be configured to be arranged on the base structure 22 for maintaining the second end of the torsion spring 12a in a fixed position. Thus, the second end of the torsion spring 12a may be configured to be held in a fixed position on the base structure 22 using the stopper plate 502. It should be noted that the fixed surface of the base structure 22 may also include, for example, an ES mounting bracket, a frame surface, or the like.

The first end of the torsion spring 12a may comprise a loop portion 504a. The loop portion 504a may be configured to be connected to the pivot shaft 18 by means of a fastener extending through the loop portion 504a. In an example, as depicted in Fig. 4A, the fastener may be a screw of bolt 506.

The second end of the torsion spring 12a may comprise a spring leg 504b. The spring leg 504b may be configured to be connected to the fixed surface/stopper plate 502 of the base structure 22.

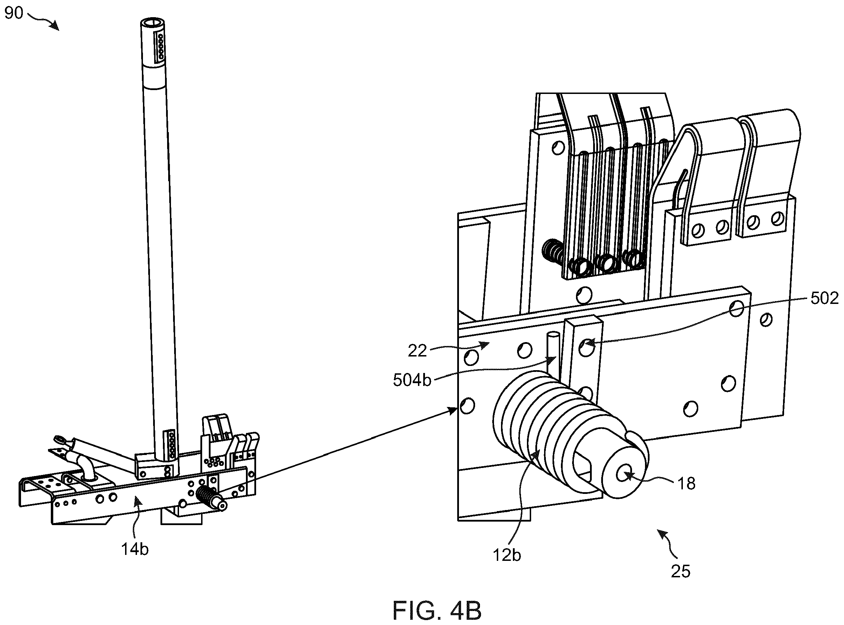

Fig. 4B discloses a vertical break disconnector 90 according to an example of the present disclosure. The vertical break disconnector 90 may be configured as the vertical break disconnector in Fig.3 or Fig.4A. The vertical break disconnector 90 comprises a torsion spring 12b arranged at one end of the pivot shaft 18.

As depicted in Fig. 4B, the vertical break disconnector 90 comprises a base structure 22 supporting a pivot shaft 18, and a torsion spring assembly 25. The pivot shaft 18 is supported by the base structure 22 at a side 14b. The torsion spring assembly 25 comprises the torsion spring 12b. The torsion spring 12b is arranged around the pivot shaft 18. The second end of the torsion spring 12b may comprise a spring leg 504b configured to be connected to the fixed surface/stopper plate 502 of the base structure 22. Thus, the second end of the torsion spring 12b may be configured to be held in a fixed position on the base structure 22 using the stopper plate 502.

It should be noted that in this example, the second end of the torsion spring 12b is pointing upwards when the second end is held in a fixed position using the stopper plate 502. The second end of the torsion spring 12a may be pointing downwards when the second end is held in the fixed position using the stopper plate as in Fig. 4A.

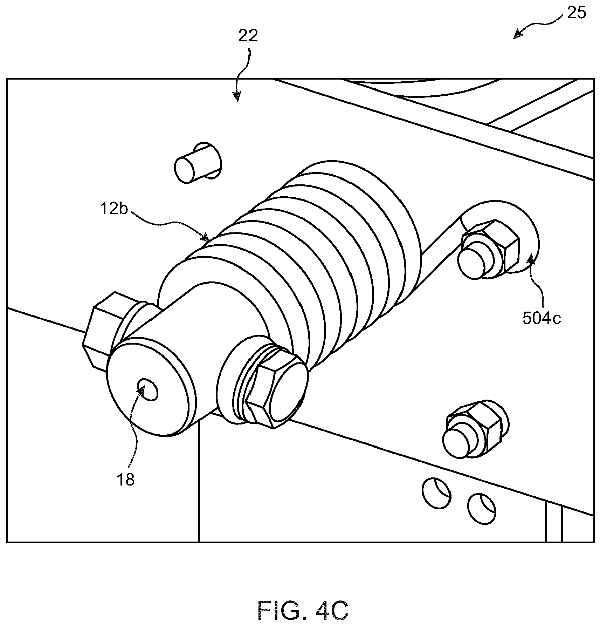

FIG. 4C discloses a torsion spring 12b being arranged around a pivot shaft 18 of a vertical break disconnector 90. The vertical break disconnector 90 may be configured as in Fig. 3, 4A or 4B. In this example, the second end of the torsion spring 12b comprises a loop portion 504c as shown in FIG. 4C. The loop portion 504c may be configured to be connected to the base structure 22 by means of a fastener, such as, a screw of bolt, extending through the loop portion 504c.

Thus, in some examples, the second end of the torsion spring 12b may include the loop portion 504c to be connected to the base structure 22 by means of the fastener as shown in FIG. 4C and in some examples, the second end of the torsion spring may include the spring leg 504b configured to be connected to the fixed surface/stopper plate 502 of the base structure 22 as shown in FIG. 4A.

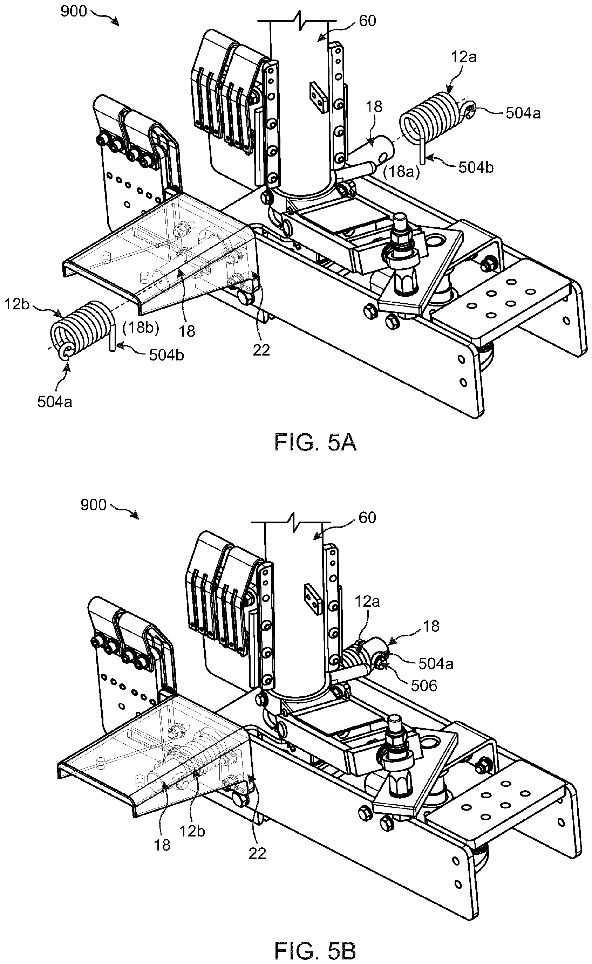

Figs. 5A and 5B disclose an example illustration of arranging two torsion springs 12a and 12b, one at each end of the pivot shaft 18 of the vertical break disconnector 90.

As depicted in Figs. 5A and 5B, the vertical break disconnector 90 comprises the movable arm 60, the base structure 22 supporting the pivot shaft 18, and the torsion spring assembly 25.

The movable arm 60 is connected to the pivot shaft 18. The pivot shaft 18 pivots the movable arm 60 between a closed position in which a current path is closed and an open position in which the current path is open.

The torsion spring assembly comprises two torsion springs 12a and 12b. The two torsion springs 12a and 12b may be assembled at each end of the pivot shaft 18 on which the movable arm 60/current path conductor swivels. Thus, the torsion springs 12a and 12b may support a dead weight of the movable arm 60/current path conductor and reduce energy required from the operative drive to operate the vertical break disconnector 90.

For assembling the torsion springs 12a and 12b, the torsion springs 12a and 12b are arranged at ends 18a and 18b of the pivot shaft 18, respectively, as depicted in Fig. 5A. Upon arranging, a first end of the torsion spring 12a is connected to the pivot shaft 18 and a second end of the torsion spring 12a is connected to the base structure 22 supporting the pivot shaft 18 at the end 18a, as depicted in Fig. 5B. Similarly, a first end of the torsion spring 12b is connected to the pivot shaft 18 and a second end of the torsion spring 12b is connected to the base structure 22 supporting the pivot shaft 18 at the end 18b, as depicted in Fig. 5B. The second end of the torsion spring 12a/12b may be held in a fixed position on the base structure 22.

Connecting the first end of the torsion spring 12a/12b to the pivot shat 18a/18b may involve connecting the loop portion 504a of the torsion spring 12a/12b to the pivot shaft 18. The loop portion 504a may be connected to the pivot shaft 18 by means of the fastener, such as, screw of bolt 506, extending through the loop portion 504a, as depicted in Fig. 5B. Connecting the second end of the torsion spring 12a/12b to the base structure 22 may involve connecting the spring leg 504b of the torsion spring to the base structure 22.

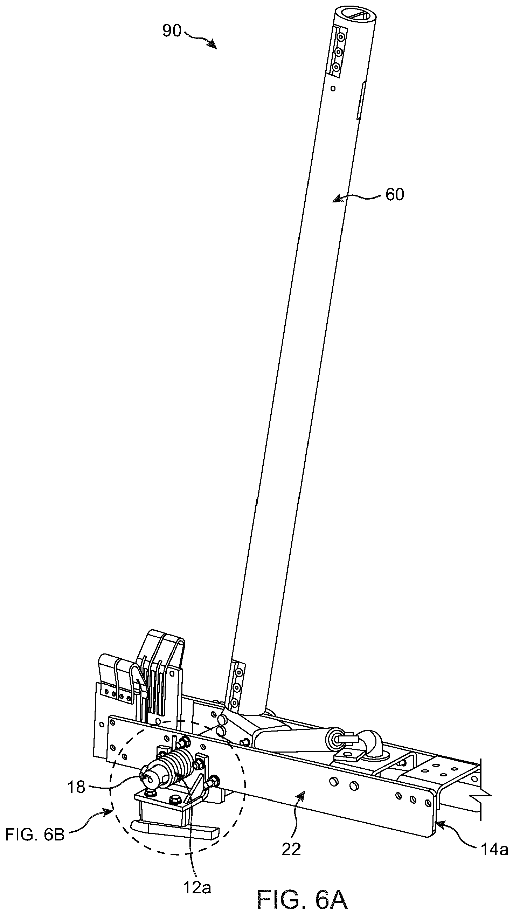

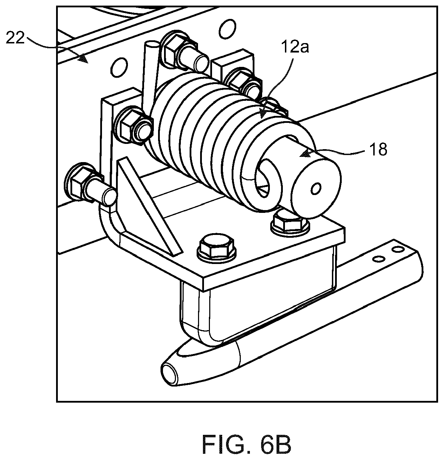

Figs. 6A and 6B disclose an example illustration of arranging the torsion spring 12a at an end of the pivot shaft 18 of a vertical break disconnector 90. The vertical break disconnector 90 comprises the pivot shaft 18 supported by the base structure 22. The pivot shaft 18 pivots the movable arm 60 between a closed position and an open position. In the closed position of the movable arm 60, a current path is closed and in the open position of the movable arm 60, the current path is open.

Figs. 6A and 6B shows the pivot shaft 18 supported at one end by side 14a of the base structure 22.

As depicted in Figs. 6A and 6B, the vertical break disconnector 90 comprises the torsion spring 12a connected to the pivot shaft 18 at a first end and to the base structure 22 at a second end.

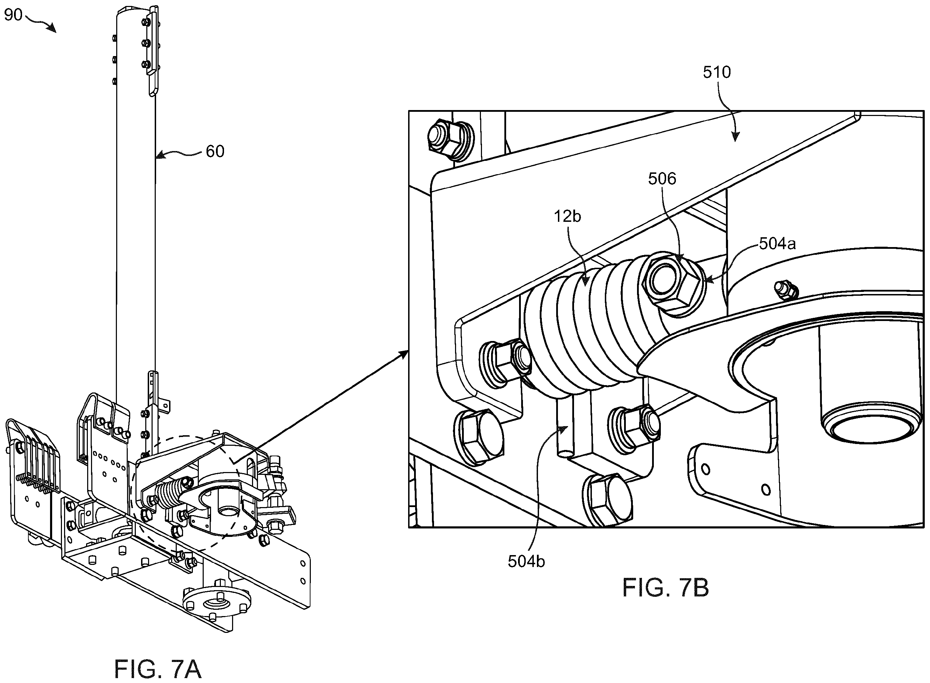

Figs. 7A and 7B disclose another example illustration of arranging the torsion spring 12b at the end of the pivot shaft 18 of the vertical break disconnector 90.

The torsion spring assembly comprising the torsion spring 12b is depicted in Figs. 7A and 7B. The torsion spring 12b is arranged around the pivot shaft 18 for balancing the dead weight of the movable arm 60 and providing torque required for operating the vertical break disconnector 90.

In some examples, the spring leg 504b of the second end of the torsion spring 12b may be connected to a fixed surface on the base structure 22, as depicted in Figs. 7A, and 7B. In some examples, the fixed surface may be an ES mounting bracket 510, as depicted in Figs. 7A and 7B.

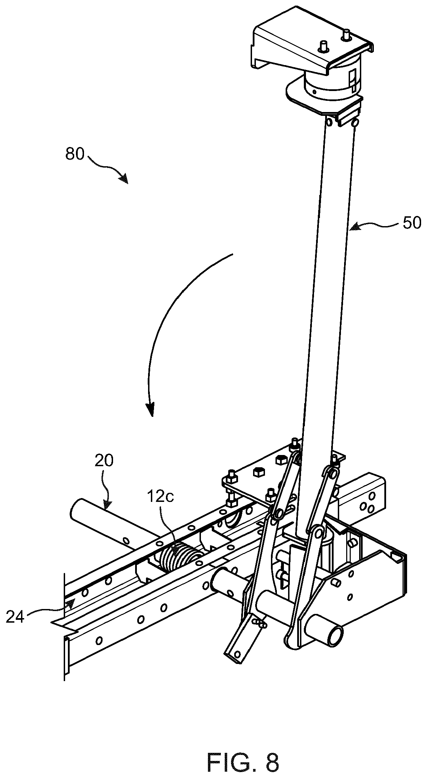

Fig. 8 discloses an example switching apparatus comprising a torsion spring assembly, wherein the switching apparatus is an earthing switch 80. The earthing switch 80 (also referred to as ground switch) may be operated together with a vertical break disconnector. The earthing switch 80 may be used to connect the isolated electrical devices to a ground such that a capacitive current or an inductive current remained on the isolated electrical devices can be eliminated and the isolated electrical devices can be operated or maintained more safely.

As depicted in Fig. 8, the earthing switch 80 comprises a movable arm 50, a base structure 24, and a pivot shaft 20. In some examples, the movable arm 50 of the earthing switch 80 may comprise an aluminium conductor. The movable arm 50 may be operated in a closed position in which the earthing switch is closed and in an open position in which the earthing switch is open. The base structure 24 supports the pivot shaft 20 for pivoting the movable arm 50 between the closed position and the open position.

The torsion spring assembly comprises a torsion spring 12c. The torsion spring 12c is arranged around the pivot shaft 20 on which the movable arm 50/earthing switch operating lever operates/rotates. Thus, the torsion spring 12c may support dead weight of the earthing switch operating lever and the movable arm and reduce energy requirement from the operating drive for operating the earthing switch 80.

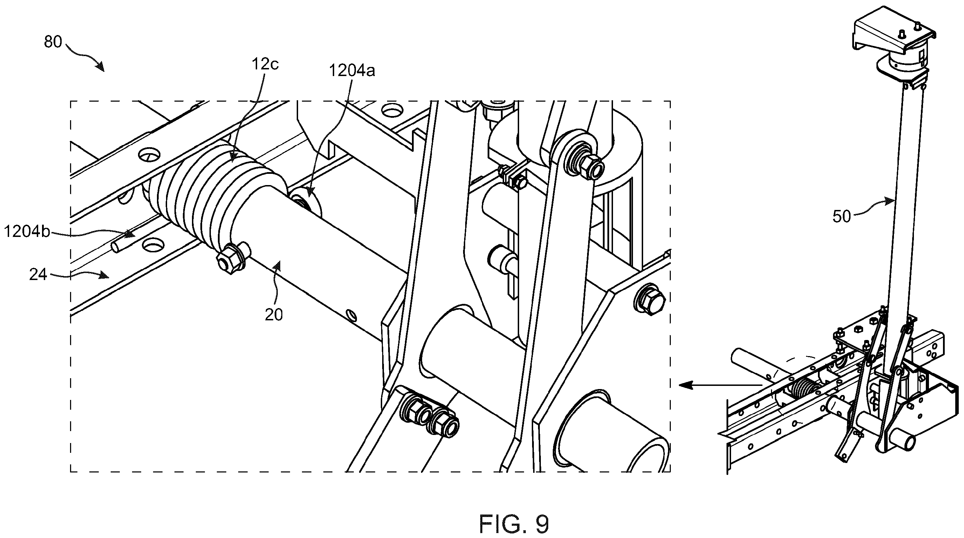

Fig. 9 discloses the earthing switch 80 comprising the torsion spring 12c as disclosed in Fig. 8. As depicted in Fig. 9, the earthing switch 80 comprises the movable arm 50, the base structure 24, and the torsion spring 12c. The base structure 24 supports the pivot shaft 20. The pivot shaft 20 pivots the movable arm 50 between the closed position and the open position.

The torsion spring 12c is arranged around the pivot shaft 20 on which the earthing switch operating lever rotates. Thus, the torsion spring 12c provides the required torque for operating the earthing switch by balancing dead weight of the earthing switch operating lever and the movable arm 50.

As depicted in Fig. 9, the torsion spring 12c is connected to the pivot shaft 20, at a first end and to the base structure 24 supporting the pivot shaft 20, at a second end. The second end of the torsion spring 12c may be configured to be held in a fixed position on the base structure 24. The base structure 24 further comprises a fixed surface (for example, a stopper plate, an ES mounting bracket, a frame surface, or the like). The fixed surface being attached on the base structure 24 may be configured to maintain the second end of the torsion spring 12c in the fixed position.

Further, the first end and the second end of the torsion spring 12c may comprise a loop portion 1204a and a spring leg 1204b, respectively. The loop portion 1204a associated with the first end of the torsion spring 12c may be configured to be connected to the pivot shaft 20 by means of a fastener extending through the loop portion 1204a. In some examples, the fastener may include a screw of bolt. The spring leg 1204b associated with the second end of the torsion spring 12c may be configured to be connected to the base structure 24. In some examples, the spring leg 1204b may be configured to be connected to the base structure 24 by means of the fastener (for example, the screw of bolt) extending through the spring leg 1204b.

The present disclosure describes some example specifications and design details of the torsion spring provided for switching apparatus operating at different voltage ratings. However, it is obvious to a person skilled in the art that any other similar specification and design details (including the below described details) may be considered.

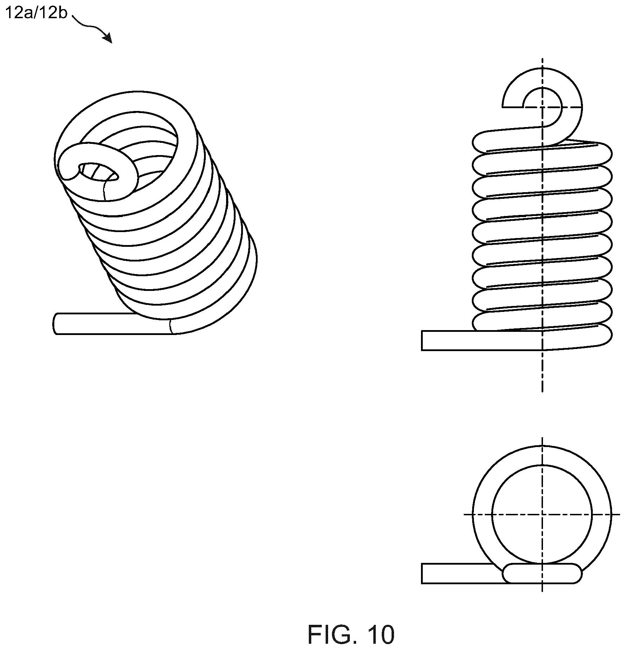

Fig. 10 discloses an exemplary torsion spring 12a/12b of a torsion spring assembly according to the present disclosure. The torsion spring 12a/12b may be provided for a switching apparatus, wherein the switching apparatus is a vertical break disconnector operating at 72.5 Kilo Volt, KV, while supporting 3000 Ampere, A, current rating. The torsion spring 12a/12b depicted in Fig. 10 shows a coil winding direction of left hand turn but it is to be understood that it could have a coil winding direction of right hand turn.

The torsion spring may be designed for different operating voltage ranges of a disconnector and earthing switch. Thus, different designs of the torsion spring may be used for different operating voltage ranges of the disconnector and the earthing switch.

A variety of parameters may be considered for designing the torsion springs. Some of the parameters may include spring rate, maximum deflection, pitch, number of turns and ends of the torsion spring.

The number of turns of the torsion spring could vary based on the application of the torsion spring to different operating voltage ranges of the disconnector and the earthing switch.

As an example, the inner coil diameter may be between 40-70 mm. The active number of body turns may be any between 7-13. The diameter of the wire may be between 8-12 mm.

The torsion spring may be provided for the vertical break disconnector operating between 123KV and 72.5KV, while supporting 2000A current rating. In some examples, the torsion spring may have a coil winding direction of left hand turn and in some examples the torsion spring may have a coil winding direction of right hand turn.

The torsion spring may be provided for the earthing switch operating between 145 KV and 170 KV. It should be noted that the torsion spring 12c with similar design may be provided for the earthing switch that has voltage rating up to 800 KV.

In some examples, the torsion spring assembly disclosed herein may be used for any switching apparatus operating at lower voltage ratings or higher voltage ratings by varying at least some of parameters associated with the at least one torsion spring. Some of the parameters may include a diameter of a wire of the torsion spring, wire sections, a number of coils of the torsion spring, and a diameter of the torsion spring.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A torsion spring assembly (25) for a switching apparatus (90, 80), the torsion spring assembly comprising:
- at least one torsion spring (12a, 12b, 12c) configured to be arranged around a pivot shaft (18, 20) for pivoting at least one movable arm (60, 50) between a closed position in which a current path is closed, and an open position in which the current path is open,
wherein the at least one torsion spring (12a, 12b, 12c) is configured to be connected to the pivot shaft (18, 20) at a first end, and to a base structure (22, 24) supporting the pivot shaft (18, 20) at a second end.

2. The torsion spring assembly (25) according to claim 1, wherein the second end of the at least one torsion spring (12a, 12b, 12c) is configured to be held in a fixed position on the base structure (22, 24).

3. The torsion spring assembly (25) according to claim 1 or 2, further comprising:
- a stopper plate (502) configured to be attached on the base structure (22, 24) for maintaining the second end of the at least one torsion spring (12a, 12b, 12c) in the fixed position.

4. The torsion spring assembly (25) according to claim 1 or 2, wherein the second end of the at least one torsion spring (12a, 12b, 12c) comprises a loop portion (504a) and is configured to be connected to the base structure (22, 24) by means of a fastener, such as a screw of bolt (506), extending through the loop portion (504a).

5. The torsion spring assembly (25) according to any one of the preceding claims, wherein the first end of the at least one torsion spring (12a, 12b, 12c) comprises a loop portion (504a, 1204a) and is configured to be connected to the pivot shaft (18, 20) by means of a fastener, such as a screw of bolt (506), extending through the loop portion (504a, 1204a).

6. The torsion spring assembly (25) according to any one of the preceding claims, comprising two torsion springs (12a, 12b) configured to be arranged one at each end of the pivot shaft (18).

7. A switching apparatus (90, 80) for an electrical circuit (100), the switching apparatus (90, 80) comprising:
- at least one movable arm (60, 50) connected to a pivot shaft (18, 20) for pivoting the at least one movable arm between a closed position in which a current path is closed, and an open position in which the current path is open;
- a base structure (22, 24) supporting the pivot shaft (18, 20); and
- a torsion spring assembly (25) comprising at least one torsion spring (12a, 12b, 12c) arranged around the pivot shaft (18, 20) and connected to the pivot shaft (18, 20) at a first end, and to the base structure (22, 24) at a second end.

8. The switching apparatus (90, 80) according to claim 7, wherein the second end of the at least one torsion spring (12a, 12b, 12c) is arranged in a fixed position on the base structure (22, 24).

9. The switching apparatus (90, 80) according to claims 7 or 8, wherein the first end of the at least one torsion spring (12a, 12b, 12c) comprises a loop portion (504a, 1204a) and is connected to the pivot shaft (18, 20) by means of a fastener, such as a screw of bolt (506), extending through the loop portion (504a, 1204a).

10. The switching apparatus (90, 80) according to any one of claims 7-9, wherein the switching apparatus (90, 80) is an earthing switch (80).

11. The switching apparatus (90, 80) according to any one of claims 7-9, wherein the switching apparatus (90, 80) is a disconnector (90).

12. The switching apparatus (90, 80) according to claims 7 or 8, further comprising:
- a stopper plate (502) attached on the base structure (22, 24) for maintaining the second end of the at least one torsion spring (12a, 12b, 12c) in a fixed position.

13. The switching apparatus (90, 80) according to claims 7 or 8, wherein the second end of the at least one torsion spring (12a, 12b, 12c) comprises a loop portion (504a, 1204a) and is configured to be connected to the base structure (22, 24) by means of a fastener, such as a screw of bolt (506), extending through the loop portion (504a, 1204a).

14. The switching apparatus (90) according to any one of claim 7-13, comprising two torsion springs (12a, 12b) arranged one at each end of the pivot shaft (18).
